# EUROPÄISCHE PATENTSCHRIFT

(11) **EP 2 895 294 B1**
(45) Veröffentlichungstag und Bekanntmachung des Hinweises auf die Patenterteilung: **28.11.2018**
(21) Anmeldenummer: 13762129.8
(22) Anmeldetag: 13.09.2013
(51) Int. Cl.: B23K 26/08, G02B 7/182

(54) **LASERBEARBEITUNGSVORRICHTUNG**
LASER PROCESSING DEVICE
DISPOSITIF DE TRAITEMENT AU LASER

(30) Priorität: 14.09.2012 EP 12184531
(43) Veröffentlichungstag der Anmeldung: 22.07.2015
(60) Teilanmeldung: 18177462.1
(73) Patentinhaber: TRUMPF Schweiz AG, 7214 Grüsch (CH)
(72) Erfinder: ZIOLEK, Carsten, CH-7212 Seewis Dorf (CH); MARZENELL, Stefan, CH-7208 Malans (CH)
(74) Vertreter: Prüfer & Partner mbB Patentanwälte · Rechtsanwälte
(86) Internationale Anmeldenummer: PCT/EP2013/069042
(87) Internationale Veröffentlichungsnummer: WO 2014/041134

(56) Entgegenhaltungen:
- FR-A1- 2 622 710
- US-A- 4 670 638
- US-A1- 2004 061 960

## Beschreibung

Die Erfindung bezieht sich auf eine Laserbearbeitungsvorrichtung zum Bearbeiten eines Werkstücks mit einer Einrichtung zum Ablenken eines Laserstrahls, insbesondere auf eine Laserbearbeitungsvorrichtung, die speziell zum Markieren eines Werkstücks verwendet wird.

Zum Markieren von Werkstücken sind Laserbearbeitungsvorrichtungen bekannt, in denen der Laserstrahl entsprechend der gewünschten aufzubringenden Markierung mittels einer Scanneroptik abgelenkt wird und auf das Werkstück fokussiert wird.

Die Scanneroptik weist zwei bewegliche Spiegel auf, die den Laserstrahl in zwei Richtungen ablenken. Der auf eine Oberfläche des Werkstücks auftreffende Laserstrahl markiert dann die Oberfläche. Eine Markierung, die z.B. durch eine sogenannte "Vektorbeschriftung" ausgeführt wird, besteht aus vielen aus Punkten aufgebauten Einzellinien oder beim Ausführen einer "Bitmapbeschriftung", bei der eine Fläche abgerastert wird, aus den aus einzelnen Punkten erzeugten Flächen. Dazu wird der Laserstrahl mit einer hohen Geschwindigkeit über das Werkstück geführt. Die Spiegel werden üblicherweise mittels sogenannter Galvos, nämlich Galvanometer, die jeweils einen auf einer magnetisch angetriebenen Achse vorgesehenen Spiegel aufweisen, bewegt. Durch das Anlegen einer Spannung an Spulen wird ein Magnetfeld erzeugt und die Achse, die einen Permanentmagnet aufweist, wird entsprechend der Stromstärke gegen eine Feder verdreht, wodurch der Spiegel ausgelenkt wird (moving magnet). Es gibt auch die Möglichkeit, dass der Magnet fest angebracht ist und die Spule bewegt wird (moving coil).

Die Erfassung einer Orientierung des Spiegels, also eines Verdrehwinkels des Spiegels, kann über einen Detektor, beispielsweise einen Fotosensor, erfolgen.

Aus dem prinzipiellen Aufbau der Galvos ergibt sich, dass für eine flächige Bearbeitung des Werkstücks mindestens zwei Galvos mit jeweils einem Spiegel erforderlich sind. Dies ist mit einem erhöhten Platzbedarf und höheren Kosten verbunden, da mehrere Bauteile erforderlich sind und der Strombedarf der Galvos hoch ist und eine entsprechende Ansteuerung erfordert.

Ein weiterer Nachteil ist es, dass für jeden Galvo ein eigenes Positionserfassungssystem für die jeweilige Achse erforderlich ist.

Dokument FR 2 622 710 A1 offenbart eine Einrichtung zum Ablenken eines Laserstrahls mit einem Spiegel, der über ein flexibles Element um eine beliebige Raumachse auslenkbar in einer Platte befestigt ist. Die Einrichtung weist elektromagnetische Spulen auf, um den Spiegel auszulenken.

Im Dokument US 4 670 638 A ist eine Vorrichtung zum Ablenken eines Laserstrahls gezeigt. Die Vorrichtung weist einen über ein Kugelgelenk gelagerten Spiegel auf. Die Vorrichtung ist mit einer Steuerung versehen, die eine Auslenkung des Spiegels ansteuert und Positionen korrigiert.

Das Dokument US 2004/061960 A1 offenbart einen unter Verwendung von MEMS (Micro-Electro-Mechanical-Systems) -Bauteilen hergestellten Scanspiegel für beispielsweise einen Barcode-Scanner oder einen Laserdrucker. Der Spiegel ist innerhalb eines Rahmens mit verdrehbaren Stegen gehalten aus einem Stück gebildet, wodurch er, durch einen Magneten angesteuert, um eine Achse auslenkbar schwenkbar ist.

Es ist Aufgabe der Erfindung, die obigen Nachteile auszuräumen und eine Laserbearbeitungsvorrichtung mit einer Einrichtung zum Ablenken eines eine Fläche überstreichenden Laserstrahls bereitzustellen, die einen geringen Platzbedarf hat und die kostengünstig hergestellt und betrieben werden kann.

Die Aufgabe wird durch eine Laserbearbeitungsvorrichtung gemäß Anspruch 1 gelöst. Weiterentwicklungen der Erfindung sind Gegenstand der Unteransprüche.

Durch die Ausbildung der Laserbearbeitungsvorrichtung gemäß einem Aspekt der Erfindung kann eine Ablenkeinheit aus einem Aufbaukörper, einem Bauelement, das eine spiegelnde Oberfläche und eine erste kraftausübende Komponente aufweist, und aus mindestens einer zweiten kraftausübenden Komponente, die mit der ersten kraftausübenden Komponente zusammenwirkt, so dass das Bauelement um eine beliebige Raumachse auslenkbar ist, kompakt und kostengünstig aufgebaut werden. Dabei ist die spiegelnde Fläche so auslenkbar, dass ein durch die spiegelnde Fläche abgelenkter Laserstrahl eine Fläche überstreichen kann. Dadurch ist es möglich, ein zu der Einrichtung ortsfestes Werkstück zweidimensional zu markieren. Durch die geringen bewegten Massen ist für einen Betrieb nur ein geringer Strom erforderlich.

Die Erfindung wird mittels Ausführungsformen an Hand der beigefügten Zeichnungen erklärt.
- Fig. 1: zeigt eine Prinzipdarstellung einer Laserbearbeitungsvorrichtung mit einer ersten Ausführungsform einer Einrichtung zum Ablenken des Laserstrahls;
- Fig. 2: zeigt eine Prinzipdarstellung einer weiteren Ausführungsform der Laserbearbeitungsvorrichtung mit der Einrichtung zum Ablenken des Laserstrahls;
- Fig. 3: zeigt eine vergrößerte Schnittansicht der Einrichtung zum Ablenken eines Laserstrahls aus Fig. 1 oder 2;
- Fig. 4: zeigt eine Prinzipdarstellung einer weiteren Ausführungsform der Laserbearbeitungsvorrichtung, bei der ein Laserresonator und die Einrichtung zum Ablenken des Laserstrahls auf einer gemeinsamen Aufbauplatte angeordnet sind;
- Fig. 5: zeigt eine Prinzipdarstellung noch einer weiteren Ausführungsform der Laserbearbeitungsvorrichtung mit einer zweiten Ausführungsform der Einrichtung zum Ablenken des Laserstrahls;
- Fig. 6: zeigt eine schematische Darstellung eines Bereichs einer dritten Ausführungsform der Einrichtung zum Ablenken des Laserstrahls;
- Fig. 7A: zeigt ein Ergebnis einer Schrittantwort eines Scanners auf ein Ansteuersignal ohne eine Vorkompensation; und
- Fig. 7B: zeigt ein Ergebnis der Schrittantwort des Scanners auf ein Ansteuersignal mit der Vorkompensation.

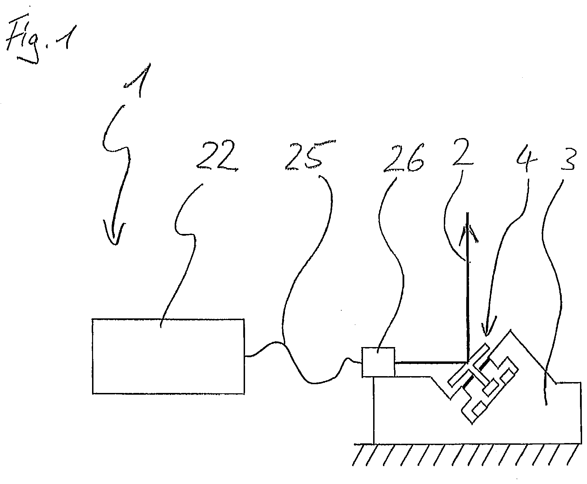

Fig. 1 zeigt eine Prinzipdarstellung einer Laserbearbeitungsvorrichtung 1 mit einer Laserstrahlquelle 22 und mit einer ersten Ausführungsform einer Einrichtung 4 zum Ablenken eines Laserstrahls 2. Die Laserstrahlquelle 22 ist hier ein Festkörperlaser in Form eines Faserlasers, kann alternativ aber auch z.B. ein Scheiben- oder Stablaser sein. In einer weiteren alternativen Ausführungsform ist die Laserstrahlquelle 22 als ein Gaslaser ausgebildet.

Die Laserbearbeitungsvorrichtung 1 in Fig. 1 weist eine Transportfaser 25 auf, die den Laserstrahl 2 über eine Auskoppeloptik auf die Ablenkeinrichtung 4 lenkt. Die Ablenkeinrichtung 4 und eine Auskoppeloptik 26, z.B. eine Kollimationsoptik, sind auf einer gemeinsamen Aufbauplatte 3 angeordnet. Alternativ kann die Auskoppeloptik 26 auch auf einer separaten Aufbauplatte angeordnet sein.

In Fig. 1 ist die Transportfaser 25 für einen Laserlichttransport gezeigt. Alternativ kann auch eine Freistrahlkopplung zwischen der Laserstrahlquelle 22 und der Ablenkeinrichtung 4 vorhanden sein.

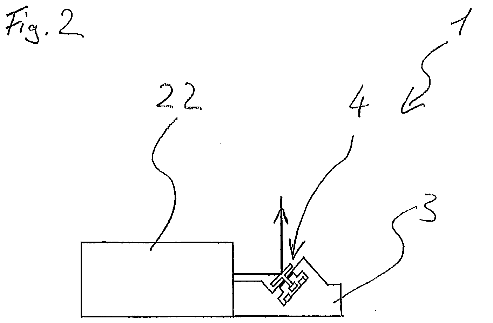

Fig. 2 zeigt eine weitere Ausführungsform der Laserbearbeitungsvorrichtung 1. Hier ist im Unterschied zu der Laserbearbeitungsvorrichtung 1 in Fig. 1 die Ablenkeinrichtung 4 nicht räumlich von der Laserstrahlquelle 22 separiert sondern die Aufbauplatte 3 der Ablenkeinrichtung 4 ist an der Laserstrahlquelle 22 angebracht, z.B. angeschraubt oder geklebt. Die Auskoppeloptik kann hierbei in der Laserstrahlquelle integriert sein.

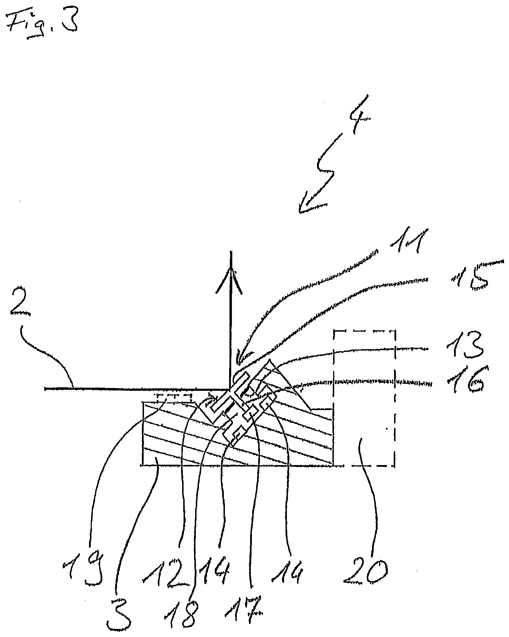

Fig. 3 zeigt eine vergrößerte Schnittansicht der Einrichtung 4 zum Ablenken des Laserstrahls 2 aus Fig. 1 oder 2. Die Einrichtung 4 weist den Aufbaukörper 3 auf. Eine kompakte Ablenkeinheit 11 enthält ein Bauelement 12, ein flexibles Element 13, und zwei Spulenpaare 14 als stromdurchflossene Elemente.

Der Aufbaukörper 3 wird bearbeitet, z.B. teilweise vergoldet und strukturiert. Des Weiteren werden sogenannte MEMS-Bauteile (Micro-Electro-Mechanical-Systems), aus denen Teile der Einrichtung 4 optional bestehen, separat hergestellt. Es handelt sich hierbei um einen Hybridaufbau, der sowohl aus Teilen, die mit MEMS-Techniken hergestellt sind, als auch aus "traditionell" hergestellten Teilen, also mittels spanender oder spanloser Formgebung hergestellten Teilen, besteht.

Die sogenannten MEMS-Bauteile umfassen im Wesentlichen das Bauelement 12, das eine spiegelnde Oberfläche 15 und ein Verbindungselement 16 umfasst, und das flexible Element 13. Das Bauelement 12 besteht zumindest im Bereich der spiegelnden Oberfläche 15 aus Quarzglas und weist eine dielektrische Beschichtung auf. Alternativ kann der Bereich der spiegelnden Oberfläche 15 auch aus Silizium, Keramik oder Metall bestehen und/oder eine metallische Beschichtung aufweisen. Die dielektrische/metallische Beschichtung ist auf der spiegelnden Oberfläche 15 vorgesehen, kann aber alternativ auch noch zusätzlich auf der gegenüberliegenden Seite vorhanden sein.

Durch den Herstellungsprozess wird in dem Aufbaukörper 3 eine Kammer 18 gebildet. Die Kammer 18 nimmt die stromdurchflossenen Elemente 14, das flexible Element 13 und das Verbindungselement 16 mit einem Magnet als eine erste kraftausübende Komponente 17 auf. Alternativ muss nicht zwingend eine Kammer 18 gebildet sein, sondern es kann lediglich ein Bauraum vorgesehen sein, in dem die Elemente angeordnet sein können.

Die spiegelnde Oberfläche 15 muss möglichst groß sein, so dass ein möglichst großer Laserspot umgelenkt werden kann, um dann einen kleinen Laserspot auf dem Werkstück erzeugen zu können. Je größer die spiegelnde Oberfläche 15 ist, umso größer ist jedoch auch die träge Masse des Bauelements 12, wodurch größere Bewegungskräfte erforderlich werden. Dadurch werden verstärkte Antriebselemente, also die stromdurchflossenen Elemente 14 und/oder der Magnet erforderlich. Die Breite und Länge der quadratischen spiegelnden Oberfläche 15 des Bauelements 12 betragen hier 7,5 mm x 7,5 mm. Alternativ betragen sie mindestens 2 mm x 2 mm aber weniger als 15 mm x 15 mm, und bevorzugt weniger als 10 mm x 10 mm. Da der Laserstrahl 2 unter einem Winkel auftrifft, der keinen senkrechten Einfall ergibt, ergibt sich der Laserspot auf der spiegelnden Oberfläche 15 nicht kreisrund sondern im Wesentlichen elliptisch. Um die spiegelnde Oberfläche 15 so klein wie möglich und so groß wie nötigt zu gestalten, kann deshalb die spiegelnde Oberfläche 15 auch eine elliptische, kreisförmige oder eine andere geeignete Form und eine andere Abmessung aufweisen. Eine Form und Abmessungen der spiegelnden Oberfläche 15 entsprechen dann einer vorbestimmten Form und maximalen Abmessungen des Laserspots. Die spiegelnde Oberfläche ist eben, kann aber alternativ auch gekrümmt ausgebildet sein.

Das Bauelement 12 ist des Weiteren mit dem Verbindungselement 16 versehen. Das Verbindungselement 16 ist in einem der spiegelnden Fläche 15 abgewandten Bereich angeordnet. Das Verbindungselement 16 weist in einem der spiegelnden Fläche 15 gegenüberliegenden Bereich, hier am Ende, den Magnet 17 auf. Der Magnet 17 ist aber alternativ nicht zwingend am Ende des Verbindungselements 16 vorgesehen, sondern kann an einer beliebigen Stelle des Verbindungselements 16 oder an einer anderen geeigneten Stelle an dem Bauelement 12 vorgesehen sein. Alternativ können auch mehrere Magnete an beliebigen Stellen angeordnet werden.

Das Verbindungselement 16 ist über das flexible Element 13 mit dem Aufbaukörper 3 verbunden. Das flexible Element 13 ist als ein Federelement ausgeführt, das das Verbindungselement 16 mit dem Aufbaukörper 3 verbindet. Das flexible Element 13 ist unterhalb der spiegelnden Oberfläche 15 angeordnet. Das flexible Element 13 kann weiterhin alternativ zu der Anordnung unterhalb der spiegelnden Oberfläche 15 auch seitlich von der spiegelnden Oberfläche 15 angeordnet sein. Dadurch verringert sich die Höhe der Einrichtung 4. Durch das Vorsehen des flexiblen Elements 13 ist das Bauelement 12 um eine beliebige Raumachse schwenkbar.

Das Schwenken um die beliebige Raumachse herum kann als ein Schwenken um eine Achse oder ein überlagertes Schwenken um zwei Achsen eines Raumkoordinatensystems verstanden werden, wobei keine der Achsen senkrecht auf der spiegelnden Oberfläche 15 angeordnet ist. Dies würde lediglich zu einer Drehung der spiegelnden Oberfläche 15 führen, ohne dass eine Ablenkung des Laserstrahls 2 geändert wird. Durch das Schwenken um die beliebige Raumachse wird ein Auslenken des Bauelements 12, und damit der spiegelnden Oberfläche 15, um einen Auslenkwinkel ermöglicht. Dies ermöglicht die Ablenkung des Laserstrahls 2 auf einen beliebigen Punkt auf einer Fläche, die durch den Schwenkbereich der spiegelnden Oberfläche 15 begrenzt ist.

Ein erstes Spulenpaar 14 besteht aus zwei Spulen, die sich bezüglich des Magneten 17 in einer Ebene gegenüberliegen. Wenn es mit Strom durchflossen ist, bildet das erste Spulenpaar 14 somit ein resultierendes Magnetfeld mit einer Achse. Ein weiteres Spulenpaar 14 ist so gedreht, dass die Achse des Magnetfelds des weiteren Spulenpaars 14 parallel zu der Ebene, in der das erste Spulenpaar 14 angeordnet ist, um 90° verdreht ist, so dass die Spulenpaare 14 senkrecht zueinander verdreht angeordnet sind. Alternativ sind auch mehrere Spulenpaare 14 möglich und die Spulenpaare 14 müssen nicht senkrecht zueinander verdreht sein, sondern können einen anderen geeigneten Winkel zueinander einschließen. Wesentlich ist, dass der Magnet 17 von den durch die Spulenpaare 14 gebildeten Magnetfeldern so ausgelenkt werden kann, dass das Bauelement 12 um die beliebige Raumachse herum um den Auslenkwinkel schwenkbar ist. Die Änderung des optischen Ablenkwinkels des Laserstrahls 2 beträgt mindestens ± 10° und in einer alternativen Ausführungsform bevorzugt ± 20°. Daraus ergibt sich ein Auslenkwinkel der spiegelnden Oberfläche 15 von ±5° bzw. bevorzugt ±10°.

Die Spulenpaare 14 sind unterhalb der spiegelnden Oberfläche 15 angeordnet, können jedoch alternativ auch seitlich von der spiegelnden Oberfläche 15 angeordnet sein, um die Höhe der Einrichtung 4 zum Umlenken des Laserstrahls 2 zu verringern.

Die Spulenpaare 14 werden so angesteuert, dass das Bauelement 12 und somit die spiegelnde Oberfläche 15 nicht resonant schwingt, so dass ein vorbestimmter Auslenkwinkel einstellbar ist.

In einem Fall, in dem an den Spulenpaaren 14 hohe Ströme angelegt werden, wird die Wärmeentwicklung so groß, dass es zu Fehlfunktion oder Zerstörung der Ablenkeinrichtung 4 kommen kann. Um jedoch bei Bedarf mit höheren Strömen arbeiten zu können, wird optional eine Vorrichtung, mit der aktiv ein Temperaturgradient unterhalb der Spulenpaare 14 erzeugt wird, vorgesehen. Beispielsweise kann diese Vorrichtung ein Peltierelement sein, welches direkt unter der Spule angebracht wird. Alternativ kann eine wasserdurchflossene Aufbauplatte 9 verwendet werden.
Als eine zweite kraftausübende Komponente 14 sind als Alternative zu den zwei Spulenpaaren 14 auch parallele Leiterbahnen als die stromdurchflossenen Elemente möglich. In diesen beiden Ausführungsformen wird die Ablenkung magnetisch hervorgerufen. In einer weiteren alternativen Ausführungsform ist eine elektrische Ablenkung über ein erstes elektrostatisch aufladbares Bauteil, z.B. einen über das flexible Element 13 aufgeladenen Zylinder, anstelle des Magneten als die erste kraftausübende Komponente 17, und als die zweite kraftausübende Komponente 14 über ein zweites elektrostatisch aufladbares Bauteil, z.B. ein anders geladenes Zylinderelement, anstelle der Spulenpaare auch denkbar. Wesentlich ist, dass mindestens eine von der ersten kraftausübenden Komponente 17 und der zweiten kraftausübenden Komponente 14 mit dem Bauelement 12 gekoppelt ist und mindestens eine der beiden kraftausübenden Komponenten 14, 17 so angepasst ist, dass sie ansteuerbar ist, so dass sich die beiden kraftausübenden Komponenten in Abhängigkeit von der Ansteuerung anziehen oder abstoßen.

Die Einrichtung 4 ist mit einem Winkelerfassungsmittel 19 versehen.

Die Winkeländerung wird durch die Positionsänderung des Magneten, z.B. mittels Hallsensoren oder das Vorsehen eines piezoresistiven Sensors bestimmt. Weiterhin ist die Einrichtung 4 zum Auslenken des Laserstrahls 2 optional mit einer Auslenkwinkelkorrektursteuerungsvorrichtung 20 versehen. Die Auslenkwinkelkorrektursteuerungsvorrichtung 20 steuert die Spulenpaare 14 so an, dass der vorbestimmte Auslenkwinkel des Bauelements 12 erreicht wird.

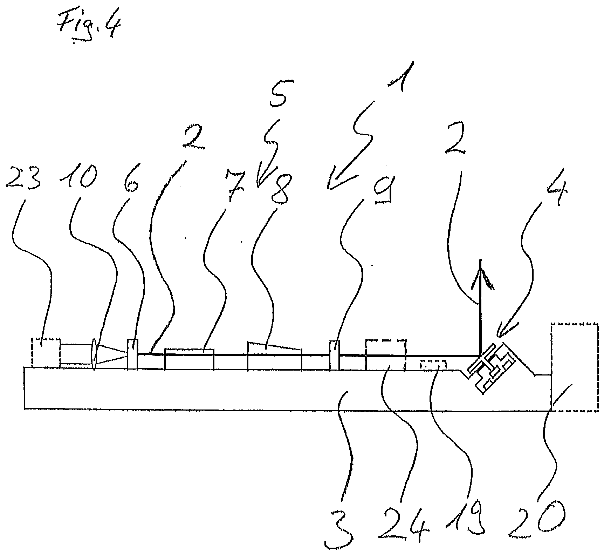

Fig. 4 zeigt eine Prinzipdarstellung einer weiteren Ausführungsform der Laserbearbeitungsvorrichtung 1 mit einem stabförmigen Festkörpermedium als aktives Medium und mit der Einrichtung 4 zum Ablenken des Laserstrahls 2. Die Laserbearbeitungsvorrichtung 1 weist hier den Aufbaukörper 3 auf, auf dem ein Laserresonator 5 angeordnet ist, und der die Einrichtung 4 aufweist.
Der Laserresonator 5 weist als Bauteile einen HR-Endspiegel 6, ein Festkörper-Lasermedium 7, einen Güteschalter 8 und einen Auskoppelspiegel 9 auf. Optional ist eine Frequenzkonversion des Laserstrahls 2 möglich, um mit anderen Wellenlängen zu arbeiten und damit unterschiedliche Materialien optimal zu bearbeiten.

Durch eine Pumpstrahlquelle 23, die optional ebenfalls auf dem Aufbaukörper 3 angeordnet ist, wird eine Pumpstrahlung erzeugt und zu dem Laserresonator 5 abgestrahlt. Zur Fokussierung der Pumpstrahlung in den Laserresonator 5 weist die Laserbearbeitungsvorrichtung 1 eine Linse 10 aus Quarzglas auf. Die Linse 10 kann alternativ auch aus einem anderen Material oder auch als eine GRIN-Linse, also eine Gradientenindex-Linse, ausgeführt sein. Alternativ kann hier eine Pumpstrahlquelle vorgesehen sein, die mittels einer Faser mit dem Laserresonator 5 gekoppelt ist.

Das Festkörper-Lasermedium 7 besteht aus Yb:YAG, also einem Ytterbium dotierten Yttrium-Aluminium-Granat-Laser, oder alternativ aus Nd:YAG oder Nd:Vanadat. Alternativ ist auch ein Festkörper-Lasermedium 7 aus Yb:Vanadat oder einem anderen laseraktiven Material möglich.

Der Auskoppelspiegel 9 ist ein separates optisches Mittel, das auf der dem Lasermedium zugewandten Stirnseite eine dielektrische Beschichtung aufweist. Die dielektrische Beschichtung ist für Laserlicht teilreflektierend.

Bei Lasern mit Pulserzeugung weist der Resonator optional einen Güteschalter 8 zur Bildung eines intensiven und sehr kurzen Laserpulses auf. Der Güteschalter 8 ist hier ein akustooptischer Modulator. Alternativ kann der Güteschalter 8 ein elektrooptischer Modulator sein. Alternativ sind auch andere Arten der Pulserzeugung und damit eine Verwendung anderer optischer Elemente, wie z.B. passive Modenkopplung mit Hilfe eines sättigbaren Absorbers im Resonator, denkbar.

Die optischen Komponenten, also die Linse 10, der HR-Endspiegel 6, das Festkörper-Lasermedium 7, der Güteschalter 8 und der Auskoppelspiegel 9 sind auf dem Aufbaukörper 3 mittels Löten befestigt. Alternativ besteht auch die Möglichkeit, die optischen Komponenten beispielsweise mittels Kleben, Laserschweißen, Klemmen oder Anschrauben mit dem Aufbaukörper 3 zu verbinden.

Der Aufbaukörper 3 besteht aus einem dotierten Silikatglas (Zerodur) . Alternativ ist auch Glaskeramik (z.B. ULE - Ultra Low Expansion Titanium-Silicatglas) oder Keramik (z.B. Aluminiumoxid, Aluminiumnitrid oder Siliziumoxid) möglich. Diese Materialien weisen einen sehr niedrigen thermischen Ausdehnungskoeffizienten auf. Dadurch kann die Anordnung des Laserresonators 5 temperaturstabil aufgebaut werden. Auch in dieser Ausführungsform kann optional die vorangehend erwähnte Vorrichtung zur Erzeugung des Temperaturgradienten vorgesehen sein.

Die Einrichtung 4 zum Ablenken des Laserstrahls 2 ist in dieser Ausführungsform in dem Aufbaukörper 3, auf dem der Laserresonator 5 aufgebaut ist, integriert. Dadurch herrschen die gleichen thermischen Bedingungen wie in dem Laserresonator 5, wodurch die gesamte Laserbearbeitungsvorrichtung 1 temperaturstabil aufgebaut werden kann, so dass eine tatsächliche Zielposition des Laserstrahls 2 im Wesentlichen einer vorbestimmten Zielposition entspricht.

Durch die Integration der Einrichtung 4 zum Ablenken des Laserstrahls 2 in den Aufbaukörper 3 ist es grundsätzlich möglich, den Aufbaukörper 3 sowohl für das Erzeugen des Laserresonators 5 als auch für das Herstellen der Einrichtung 4 in gleichen Arbeitsgängen zu bearbeiten. Handlingseinrichtungen und Greifer, die beim Positionieren der optischen Komponenten des Laserresonators 5 verwendet werden, können grundsätzlich ebenfalls für ein Zusammenfügen der MEMS- und Nicht-MEMS-Bauteile verwendet werden.

Optional sind auch in dieser Ausführungsform die Winkelerfassungsmittel 19 und die Auslenkwinkelkorrektursteuerungsvorrichtung 20 vorgesehen.

Als eine weitere Option ist die Laserbearbeitungsvorrichtung 1 mit einer Strahlformungseinheit 24, die optische Komponenten zur Beeinflussung des Laserstrahls aufweist, versehen. Die Strahlformungseinheit 24 ist hier nur prinzipiell dargestellt und kann Komponenten aufweisen, die bezüglich des Laserstrahls sowohl vor der spiegelnden Oberfläche 15 als auch danach angeordnet sind. Damit wird beispielsweise der Laserstrahl vor der spiegelnden Oberfläche 15 aufgeweitet und nach der spiegelnden Oberfläche 15 auf das Werkstück fokussiert.

Des Weiteren können die optischen Komponenten des Laserresonators oder der Strahlformungseinheit derart ausgestaltet sein, dass Astigmatismus, z.B. durch eine Kombination von Zylinderlinsen, korrigiert werden kann.

Die Laserbearbeitungsvorrichtung 1 kann einen oder mehrere Faltungsspiegel (Umlenkspiegel) aufweisen, wobei der Einfallswinkel auf die spiegelnde Oberfläche 15 in einem Bereich von 10° - 80° liegt.

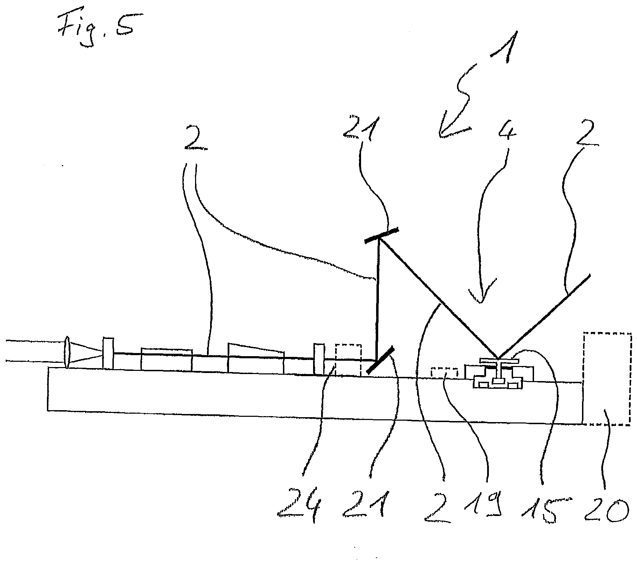

Als Beispiel ist in Fig. 5 die Laserbearbeitungsvorrichtung 1 mit einer zweiten Ausführungsform der Einrichtung 4 zum Ablenken eines Laserstrahls 2 gezeigt. Der Unterschied zu der in Fig. 4 gezeigten Ausführungsform ist, dass der Laserstrahl 2 mittels zweier Umlenkspiegel 21 umgelenkt (gefaltet) wird, bevor der Laserstrahl 2 auf die spiegelnde Oberfläche 15 trifft und von dort abgelenkt wird. Hierbei ist die Anordnung der Elemente der Einrichtung 4 so, dass die MEMS-Bauteile günstiger montiert werden können als bei den in Fig. 1 bis 4 gezeigten Ausführungsformen. Die Anzahl der Umlenkspiegel 21 ist alternativ nicht auf zwei Umlenkspiegel 21 festgelegt, sondern kann eine andere geeignete Anzahl sein. Alternativ können die Umlenkspiegel auch in einer Ebene parallel zu der Oberseite des Aufbaukörpers 3 angeordnet sein.

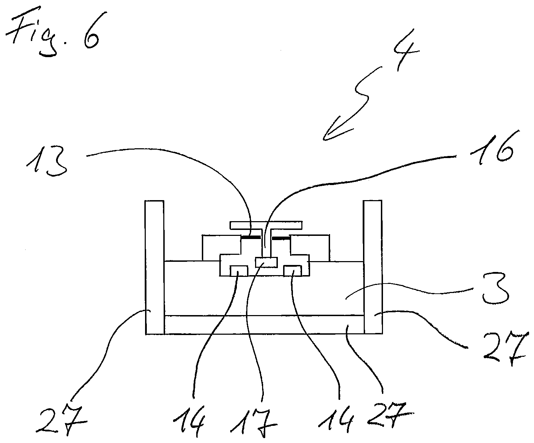

In Fig. 6 ist ein Bereich einer dritten Ausführungsform der Einrichtung 4 zum Ablenken des Laserstrahls schematisch gezeigt. Um die Einrichtung 4 ist hier eine Abschirmung 27 angebracht. Bei der Abschirmung 27 handelt es sich um eine Schicht eines Materials mit hoher magnetischer Permeabilität (Eisen, Mu-Metall (weichmagnetische Nickel-Eisenlegierung), etc.). Durch die Abschirmung 27 wird das durch den Magnet 17 und/oder die stromdurchflossenen Elemente 14 erzeugte Magnetfeld im Aufbaukörper 3, der aus einem nicht magnetisierbaren Material besteht, nicht durch äußere Magnetfelder beeinflusst.

Da der Magnet 17 durch diese Schicht angezogen wird, ist die Abschirmung 27 in genügendem Abstand und konzentrisch zum Magneten 17 vorgesehen. Die Kraft, die zwischen dem Magnet 17 und Abschirmung 27 wirkt, sollte so klein sein, dass sich das flexible Element 13, das über das Verbindungselement 16 mit dem Magneten 17 verbunden ist, nicht zu stark verformt. In einer bevorzugten Ausführungsform ist der Abstand der Abschirmung 27 vom Magnet 17 kleiner als 20 mm, und in einer besonders bevorzugten Ausführungsform ist der Abstand kleiner als 10 mm, um die Vorrichtung möglichst kompakt zu halten.

Sämtliche vorgenannten alternativen Ausführungsformen sind im Wesentlichen kombinierbar, sofern keine technischen und/oder wirtschaftlichen Gründe dagegen sprechen.

Im Betrieb wird entweder durch die Laserstrahlquelle 22 ein Laserstrahl 2 erzeugt, oder es wird durch die Pumpstrahlquelle 23 ein sogenanntes Pumplicht erzeugt, das durch die Linse 10 in den Laserresonator 5 fokussiert wird, wodurch ein Laserstrahl 2 erzeugt wird. Nach dem Einstellen des vorbestimmten Auslenkwinkels der spiegelnden Oberfläche 15 mittels einer nicht gezeigten Steuerungsvorrichtung der Laserbearbeitungsvorrichtung 1 und Einschalten des Laserstrahls 2 durch die Steuerungsvorrichtung der Laserbearbeitungsvorrichtung 1 wird der Laserstrahl 2 durch die spiegelnde Oberfläche 15 des Bauelements 12 um den vorbestimmten Ablenkwinkel abgelenkt und auf ein Werkstück geführt oder auf das Werkstück fokussiert. Der vorbestimmte Ablenkwinkel des Laserstrahls 2 wird durch Einstellen des Auslenkwinkels des Bauelements 12 mittels der Steuerungsvorrichtung der Laserbearbeitungsvorrichtung 1 über ein Ansteuern der Stromstärke durch die Spulenpaare 14, die das Bauelement 12 mittels des Magneten 17 auslenken, eingestellt.

Im weiteren Verlauf der Bearbeitung wird die Auslenkung der spiegelnden Oberfläche 15 mittels der Spulenpaare 14 dann so angesteuert, dass ein von der spiegelnden Oberfläche 15 des Bauelements 12 abgelenkter Laserstrahl 2, von der Steuerungsvorrichtung der Laserbearbeitungsvorrichtung 1 angesteuert, einen vorbestimmten Bahnabschnitt abfährt. Nach dem Abfahren des vorbestimmten Bahnabschnitts wird der Laserstrahl 2 wieder ausgeschaltet. Dieses Abfahren wird entweder von Punkt zu Punkt gesteuert oder eine definierte Bahnkurve wird abgefahren. Somit kann durch eine Synchronisation eines Ein- und Ausschaltens oder einer Leistungsmodulierung des Laserstrahls 2 und der Auslenkung des Bauteils 12 auf dem Werkstück eine gewünschte Markierung aufgebracht werden. Das Werkstück kann relativ zu der Einrichtung entweder ortsfest sein oder relativ dazu bewegbar sein.

Wenn die Auslenkwinkelkorrektursteuerungsvorrichtung 20 vorhanden ist, wird die von dem Winkelerfassungsmittel 19 erfasste tatsächliche Position so verarbeitet, dass Abweichungen zwischen der tatsächlichen Position und der vorbestimmten Position, oder der erfassten Bahnkurve von der vorbestimmten Bahnkurve, ermittelt werden, und korrigierte Ströme an die Spulenpaare 14 ausgegeben werden. Somit wird die tatsächliche Position/Bahnkurve auf die vorbestimmte Position/Bahnkurve korrigiert, so dass ein Feedbacksystem für eine Genauigkeit der Bewegung vorhanden ist.

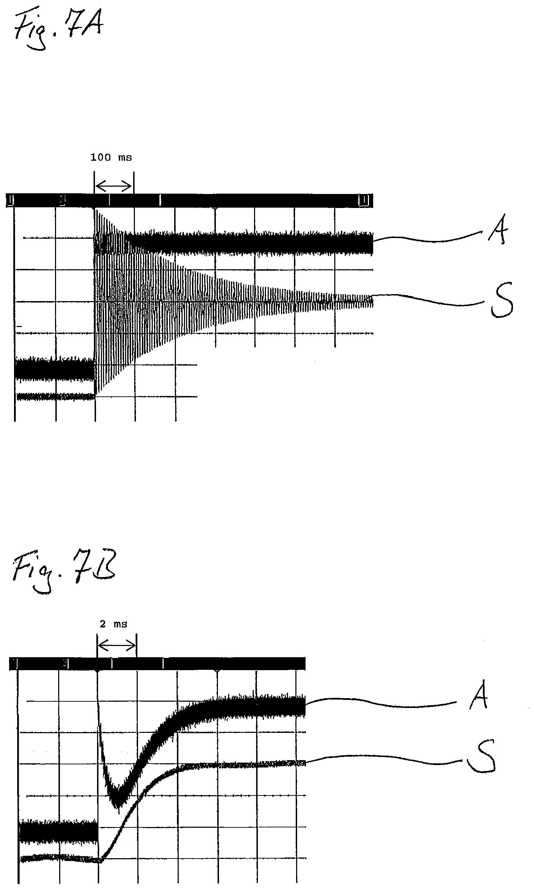

Um eine schnellere Schrittantwort des Scanners auf ein Ansteuersignal A zu ermöglichen, kann eine Vorkompensation des Ansteuersignals A vorgenommen werden. Das Ansteuersignal A wird durch eine Steuerspannung gebildet. Die Vorkompensation kann z.B. gemäß der Veröffentlichung "Sub-100 µs Settling Time and Low Voltage Operation for Gimbal-less Two-Axis Scanners", Veljko Millanovic and Kenneth Castelino, in IEEE/LEOS Optical MEMS 2004, Takamatsu, Japan, Aug. 2004 durchgeführt werden. Fig. 7A zeigt ein Ergebnis einer Schrittantwort S ohne die Vorkompensation und Fig. 7B zeigt ein Ergebnis der Schrittantwort S mit der Vorkompensation. Die Schrittantwort S wird über ein PSD-Signal erfasst. Wie hier zu sehen ist, kann bei einem beispielhaften 4x4 mm Spiegel, der eine Resonanzfrequenz von 164 Hz aufweist und mit 80 mA betrieben wird, der Scannerspiegel anstatt in 700 ms ohne Vorkompensation (Fig. 7A), bei einer entsprechenden Vorkompensation (Fig. 7B) in 5 ms in einen gewünschten Winkel gebracht werden, d.h. das Lasersignal an eine gewünschte Position innerhalb des Bearbeitungsfeldes gelenkt werden.

Eine alternative Verwendung ist auch bei einer Mikrobearbeitung oder bei einem Rapid-Prototyping denkbar.

## Patentansprüche

1. Laserbearbeitungsvorrichtung (1) zum Bearbeiten eines Werkstücks, mit
einer Laserstrahlquelle (22) und
einer Einrichtung (4) zum Ablenken eines Laserstrahls (2) der Laserstrahlquelle (22), aufweisend:
einen Aufbaukörper (3),
ein Bauelement (12) mit einer spiegelnden Oberfläche (15),
ein flexibles Element (13), durch das das Bauelement (12) mit dem Aufbaukörper (3) direkt verbindbar ist, wobei das Bauelement (12) um eine beliebige Raumachse um einen Auslenkwinkel auslenkbar ist,
eine erste kraftausübende Komponente (17) und mindestens eine zweite kraftausübende Komponente (14), wobei zumindest eine der kraftausübenden Komponenten (14, 17) derart ansteuerbar ist, dass sich die beiden kraftausübenden Komponenten (14, 17) in Abhängigkeit von der Ansteuerung anziehen oder abstoßen,
wobei eine der kraftausübenden Komponenten (14, 17) mit dem Bauelement (12) gekoppelt ist und die beiden kraftausübenden Komponenten (14, 17) so angeordnet sind und zusammenwirken, dass das Bauelement (12) um die beliebige Raumachse um einen vorbestimmten Auslenkwinkel auslenkbar ist, **dadurch gekennzeichnet, dass**
ein Winkelerfassungsmittel (19) zum Erfassen eines tatsächlichen Auslenkwinkels, um den das Bauelement (12) ausgelenkt ist, vorgesehen ist, und
eine Auslenkwinkelkorrektursteuerungsvorrichtung (20) vorgesehen ist, zum Steuern eines Auslenkens des Bauelements (12) in Abhängigkeit von dem vorbestimmten Auslenkwinkel und dem tatsächlichen Auslenkwinkel, so dass der tatsächliche Auslenkwinkel dem vorbestimmten Auslenkwinkel entspricht,
wobei ein piezoresistiver Sensor als das Winkelerfassungsmittel (19) vorgesehen ist, oder
wobei die erste kraftausübende Komponente (17) mindestens ein Magnet ist, und wobei die zweite kraftausübende Komponente (14) mindestens ein stromdurchflossenes Element mit einem elektromagnetischen Kraftfeld ist, und das Winkelerfassungsmittel (19) ausgebildet ist, eine Winkeländerung durch eine Positionsänderung des mindestens einen Magneten zu bestimmen.

2. Laserbearbeitungsvorrichtung (1) gemäß Anspruch 1, wobei die erste kraftausübende Komponente (17) an dem Bauelement (12) in einem der spiegelnden Oberfläche (15) abgewandten Bereich angeordnet ist.

3. Laserbearbeitungsvorrichtung (1) gemäß einem der vorangehenden Ansprüche, wobei die erste kraftausübende Komponente (17) an einem Verbindungselement (16) des Bauelements (12) angeordnet ist.

4. Laserbearbeitungsvorrichtung (1) gemäß Anspruch 1 oder 2, wobei die erste kraftausübende Komponente (17) an dem Bauelement (12) seitlich von der spiegelnden Oberfläche angeordnet ist.

5. Laserbearbeitungsvorrichtung (1) gemäß einem der vorangehenden Ansprüche, wobei die zweite kraftausübende Komponente (14) seitlich der spiegelnden Oberfläche (15) angeordnet ist.

6. Laserbearbeitungsvorrichtung (1) gemäß Anspruch 1 bis 4, wobei die zweite kraftausübende Komponente (14) unterhalb der spiegelnden Oberfläche angeordnet ist.

7. Laserbearbeitungsvorrichtung (1) gemäß einem der vorangehenden Ansprüche, wobei mindestens zwei stromdurchflossene Elemente vorgesehen sind, die senkrecht zueinander verdreht angeordnet sind.

8. Laserbearbeitungsvorrichtung (1) gemäß einem der vorangehenden Ansprüche, wobei das flexible Element (13) unterhalb der spiegelnden Oberfläche (15) angeordnet ist.

9. Laserbearbeitungsvorrichtung (1) gemäß einem Ansprüche 1 bis 7, wobei das flexible Element (13) seitlich der spiegelnden Oberfläche (15) angeordnet ist.

10. Laserbearbeitungsvorrichtung (1) gemäß einem der vorangehenden Ansprüche, wobei der Auslenkwinkel der spiegelnden Oberfläche (15) mindestens ± 5°, bevorzugt mindestens ± 10° beträgt.

11. Laserbearbeitungsvorrichtung (1) gemäß einem der vorangehenden Ansprüche, wobei sie ferner ein optisches Mittel zum Fokussieren des Laserstrahls (2) auf das Werkstück aufweist.

12. Laserbearbeitungsvorrichtung (1) gemäß einem der vorangehenden Ansprüche, wobei der auf die spiegelnde Oberfläche (15) auftreffende Laserstrahl (2) einen Laserspot mit einer vorbestimmten Form und maximalen vorbestimmten Abmessungen bildet, und wobei die spiegelnde Oberfläche (15) eine Form und Abmessungen aufweist, die im Wesentlichen der vorbestimmten Form und den maximalen Abmessungen des Laserspots entsprechen.

13. Laserbearbeitungsvorrichtung (1) gemäß einem der vorangehenden Ansprüche, wobei sie MEMS-Bauteile aufweist.

14. Laserbearbeitungsvorrichtung (1) gemäß einem der vorangehenden Ansprüche, wobei sie eine Steuerungsvorrichtung zum Ansteuern eines Ein- und Ausschaltens des Laserstrahls (2) und zum Ansteuern eines Auslenkens um den vorbestimmten Auslenkwinkel aufweist, so dass ein vorbestimmter Bahnabschnitt mit dem Laserstrahl (2) auf dem Werkstück abfahrbar ist.

15. Laserbearbeitungsvorrichtung (1) gemäß einem der vorangehenden Ansprüche,
wobei sie einen auf dem Aufbaukörper (3) angebrachten Laserresonator (5) aufweist.

16. Laserbearbeitungsvorrichtung (1) gemäß einem der vorangehenden Ansprüche, wobei die Laserbearbeitungsvorrichtung (1) eine Lasermarkierungsvorrichtung ist.

17. Verfahren zum Aufbringen einer Lasermarkierung auf einem Werkstück mit einer Laserbearbeitungsvorrichtung (1) gemäß Anspruch 16, das die Schritte aufweist:
Einstellen des vorbestimmten Auslenkwinkels der spiegelnden Oberfläche (15) durch Ansteuern der ersten und/oder zweiten kraftausübenden Komponente (14, 17);Einschalten eines Laserstrahls (2) mittels einer Steuerungsvorrichtung der Laserbearbeitungsvorrichtung (1);
Ansteuern der ersten und/oder zweiten kraftausübenden Komponente (14, 17) so, dass der Laserstrahl (2) auf dem Werkstück einen vorbestimmten Bahnabschnitt abfährt; und
Ausschalten des Laserstrahls (2) mittels der Steuerungsvorrichtung der Laserbearbeitungsvorrichtung (1).

18. Verfahren gemäß Anspruch 17 mit den zusätzlichen Schritten:
Bestimmen des tatsächlichen Auslenkwinkels durch Bestimmen der Winkeländerung durch Bestimmen der Positionsänderung des mindestens einen Magneten; oder
Bestimmen des tatsächlichen Auslenkwinkels mittels eines piezoresistiven Sensors; und
Steuern des Auslenkens des Bauelements (12) in Abhängigkeit von dem vorbestimmten Auslenkwinkel und dem tatsächlichen Auslenkwinkel, so dass der tatsächliche Auslenkwinkel dem vorbestimmten Auslenkwinkel entspricht.

## Claims

1. Laser machining device (1) for machining a workpiece, the laser machining device (1) having
a laser beam source (22) and
an equipment (4) for deflecting a laser beam (2) of the laser beam source (22), comprising:
a mounting body (3),
a structural member (12) having a reflecting surface (15),
a flexible element (13) by which the structural member (12) can be directly joined to the mounting body (3), wherein the structural member (12) is deflectable around an arbitrary space axis about an angle of deflection,
a first forcing component (17) and at least one second forcing component (14), wherein at least one of the forcing components (14, 17) is controllable such that the two forcing components (14, 17) gravitate towards each other or push-off depending on the triggering,
wherein one of the forcing components (14, 17) is coupled to the structural member (12) and the two forcing components (14, 17) are arranged and cooperate such that the structural member (12) is deflectable around the arbitrary space axis about a predetermined deflection angle,
**characterized in that**
an angle detection device (19) for detecting an actual angle of deflection about which the structural member (12) is deflected is provided, and
an angle of deflection correcting control device (20) for controlling a deflection of the structural member (12) depending on the predetermined angle of deflection and the actual angle of deflection so that the actual angle of deflection corresponds to the predetermined angle of deflection is provided,
whererin a piezoresistive sensor is provided as the angle detection device (19), or
wherein the first forcing component (17) is at least one magnet and wherein the second forcing component (14) is at least one current-carrying member with an electromagnetic force field, and the angle detection device (19) is configured to determine a change in angle by a change of positon of the at least one magnet.

2. Laser machining device (1) according to claim 1, wherein the first forcing component (17) at the structural member (12) is arranged in a portion averted from the reflecting surface (15).

3. Laser machining device (1) according to any of the preceding claims, wherein the first forcing component (17) is arranged at a joining element (16) of the structural member (12).

4. Laser machining device (1) according to claim 1 or 2, wherein the first forcing component (17) is arranged at the structural member (12) sidewards of the reflecting surface.

5. Laser machining device (1) according to any of the preceding claims, wherein the second forcing component (14) is arranged sidewards of the reflecting surface (15).

6. Laser machining device (1) according to claim 1 to 4, wherein the second forcing component (14) is arranged below the reflecting surface.

7. Laser machining device (1) according to any of the preceding claims, whereby at least two current-carrying elements being rotated vertically with respect to another are provided.

8. Laser machining device (1) according to any of the preceding claims, wherein the flexible element (13) is arranged below the reflecting surface (15).

9. Laser machining device (1) according to any of the claims 1 to 7, wherein the flexible element (13) is arranged sidewards of the reflecting surface (15).

10. Laser machining device (1) according to any of the preceding claims, wherein the angle of deflection of the reflecting surface (15) is at least ± 5 degrees, preferably at least ± 10 degrees.

11. Laser machining device (1) according to any of the preceding claims, wherein it further comprises an optical device for focusing the laser beam (2) onto the workpiece.

12. Laser machining device (1) according to any of the preceding claims, wherein the laser beam (2) impinging onto the reflecting surface (15) generates a laser spot having a predetermined shape and maximum predetermined dimensions, and wherein the reflecting surface (15) has a shape and dimensions corresponding substantially to the predetermined shape and the maximum dimensions of the laser spot.

13. Laser machining device (1) according to any of the preceding claims, wherein it comprises MEMS members.

14. Laser machining device (1) according to any of the preceding claims, wherein it comprises a control device for controlling a switching-on and a switching-off of the laser beam (2) and for controlling a deflection about the predetermined angle of deflection so that a predetermined portion of a track can be followed with the laser beam (2) on the workpiece.

15. Laser machining device (1) according to any of the preceding claims, wherein it comprises a laser resonator (5) attached on the mounting body (3).

16. Laser machining device (1) according to any of the preceding claims, wherein the laser machining device (1) is a laser marking device.

17. Method for applying a laser marking on a workpiece by a laser machining device (1) according to claim 16, the method comprising the steps:
adjusting the predetermined angle of deflection of the reflecting surface (15) by controlling the first and/or second forcing component (14, 17);
switching-on a laser beam (2) by means of a control device of the laser machining device (1);
controlling the first and/or second forcing component (14, 17) such that the laser beam (2) follows a predetermined portion of a track on the workpiece; and
switching-off the laser beam (2) by means of the control device of the laser machining device (1).

18. Method according to claim 17 with the additional steps:
determining the actual angle of deflection by determining the change in angle by determining the change of position of the at least one magnet; or
determining the actual angle of deflection by means of a piezoresistive sensor; and
controlling the deflection of the structural member (12) depending on the predetermined angle of deflection and the actual angle of deflection so that the actual angle of deflection corresponds to the predetermined angle of deflection.

## Revendications

1. Dispositif de traitement par laser (1) pour traiter une pièce comprenant :
- une source de rayon laser (22), et
- une installation (4) pour dévier le rayon laser (2) de la source (22) comprenant :
* un socle (3),
* un élément (12) avec une surface-miroir,
* un organe flexible (13) qui relie directement l'élément (12) au socle (3), l'élément (12) pouvant être dévié autour d'un axe quelconque de l'espace selon un angle de déviation,
* un premier composant (17) exerçant une force et au moins un second composant (14) exerçant une force, au moins l'un des composants exerçant une force (14, 17) étant commandé pour que les deux composants (14, 17), s'attirent ou se repoussent en fonction de la commande,
* l'un des composants (14, 17) exerçant une force étant couplé à l'élément (12) et les deux composants exerçant une force (14, 17) étant installés pour coopérer de façon que l'élément (12) puisse être dévié autour d'un axe quelconque de l'espace selon un angle de déviation prédéfini,
dispositif **caractérisé en ce qu'**
- un moyen de saisie d'angle (19) est prévu pour saisir l'angle de déviation effectif autour duquel l'élément (12) est dévié, et
- un dispositif de commande de correction de l'angle de déviation (20) pour commander la déviation de l'élément (12) en fonction de l'angle de déviation prédéfini et de l'angle de déviation effectif pour que l'angle de déviation effectif corresponde à l'angle de déviation prédéfini,
- un capteur piézorésistant étant prévu comme moyen de saisie de l'angle (19), ou
- le premier composant (17) exerçant une force est au moins un aimant et le second composant (14) exerçant une force est au moins un élément traversé par un courant avec un champ de force électromagnétique et le moyen de saisie angulaire (19) est conçu pour déterminer la variation d'angle par une variation de position d'au moins l'un des aimants.

2. Dispositif de traitement par laser (1) selon la revendication 1,
selon lequel
le premier composant exerçant une force (17) est installé sur l'élément (12) dans une zone opposée à la surface-miroir (15).

3. Dispositif de traitement par laser (1) selon l'une des revendications précédentes,
dans lequel
le premier composant (17) exerçant une force est installé sur un organe de liaison (16) de l'élément (12).

4. Dispositif de traitement par laser (1) selon la revendication 1 ou 2,
dans lequel
le premier composant (17) exerçant une force est installé sur l'élément (12) à côté de la surface miroir.

5. Dispositif de traitement par laser (1) selon l'une des revendications précédentes,
dans lequel
le second composant (14) exerçant une force est installé à côté de la surface miroir (15).

6. Dispositif de traitement par laser (1) selon les revendications 1 à 4,
dans lequel
le second composant (14) exerçant une force est installé sous la surface-miroir.

7. Dispositif de traitement par laser (1) selon l'une des revendications précédentes,
comprenant au moins deux éléments traversés par le courant et qui sont tournés perpendiculaire l'un par rapport à l'autre.

8. Dispositif de traitement par laser (1) selon l'une des revendications précédentes,
dans lequel
l'organe flexible (13) est sous la surface-miroir (15).

9. Dispositif de traitement par laser (1) selon les revendications 1 à 7,
dans lequel
l'organe flexible (13) est à côté de la surface-miroir (15).

10. Dispositif de traitement par laser (1) selon l'une des revendications précédentes,
dans lequel
l'angle de déviation de la surface miroir (15) est au moins égal à ± 5°, de préférence au moins égal à ± 10°.

11. Dispositif de traitement par laser (1) selon l'une des revendications précédentes,
comportant en outre un moyen optique pour focaliser le faisceau laser (2) sur la pièce à traiter.

12. Dispositif de traitement par laser (1) selon l'une des revendications précédentes,
selon lequel
le faisceau laser (2) arrivant sur la surface miroir (15) forme un point laser de forme prédéfinie et de dimensions maximales prédéfinies et la surface-miroir (15) a une forme et des dimensions qui correspondent pratiquement à la forme prédéfinie et aux dimensions maximales du point laser.

13. Dispositif de traitement par laser (1) selon l'une des revendications précédentes,
comprenant des composants MEMS.

14. Dispositif de traitement par laser (1) selon l'une des revendications précédentes,
comprenant un dispositif de commande pour commander la mise en marche et l'arrêt du faisceau laser (2) et pour commander la déviation selon un angle de déviation prédéfini de façon que le faisceau laser (2) parcourt un segment de trajet prédéfini sur la pièce à traiter.

15. Dispositif de traitement par laser (1) selon l'une des revendications précédentes,
comportant un résonateur laser (5) installé sur le socle (3).

16. Dispositif de traitement par laser (1) selon l'une des revendications précédentes,
selon lequel
le dispositif de traitement laser (1) est un dispositif de marquage laser.

17. Procédé pour appliquer un marquage laser sur une pièce à traiter avec un dispositif de traitement laser (1) selon la revendication 16, et comprenant les étapes consistant à :
- régler l'angle de déviation prédéfini de la surface-miroir (15) par la commande du premier et/ou du second composant exerçant une force (14, 17), activer le faisceau laser (2) à l'aide d'un dispositif de commande du dispositif de traitement laser (1),
- commander le premier et/ou le second composant exerçant une force (14, 17) pour que le faisceau laser (2) décrive sur la pièce à traiter, un segment de trajet prédéfini, et
- couper le faisceau laser (2) à l'aide du dispositif de commande du dispositif de traitement laser (1).

18. Procédé selon la revendication 17, comprenant les étapes suivantes consistant à :
- déterminer l'angle de déviation effectif en déterminant la variation d'angle en détectant la variation de position d'au moins un aimant, ou
- déterminer l'angle de déviation effectif à l'aide d'un capteur piézorésistant, et
- commander la déviation de l'élément (12) en fonction de l'angle de déviation prédéfini et de l'angle de déviation effectif pour que l'angle de déviation effectif corresponde à l'angle de déviation prédéfini.
